**Europäisches Patentamt**

**European Patent Office**

**Office européen des brevets**

(19)

(11) Veröffentlichungsnummer: **0 120 231**
**A2**

(12) # EUROPÄISCHE PATENTANMELDUNG

(21) Anmeldenummer: **84101104.2**

(22) Anmeldetag: **03.02.84**

(51) Int. Cl.³: **G 01 N 21/78**
**G 01 N 31/22**

(30) Priorität: **23.03.83 CH 1578/83**

(43) Veröffentlichungstag der Anmeldung:
**03.10.84 Patentblatt 84/40**

(84) Benannte Vertragsstaaten:
**AT BE CH DE FR GB IT LI NL SE**

(71) Anmelder: **CERBERUS AG**
**Alte Landstrasse 411**
**CH-8708 Männedorf(CH)**

(72) Erfinder: **Güttinger, Hannes, Dr. Dipl. Phys.**
**Obere Lattenbergstrasse 20d**
**CH-8712 Stäfa(CH)**

(72) Erfinder: **Pfister, Gustav, Dr. sc.nat. Phys.**
**Forbüelstrasse 17**
**CH-8707 Uetikon(CH)**

(72) Erfinder: **Reis, Alfons, Dr. rer.nat. Phys.**
**Kreuzstrasse 25**
**CH-8712 Stäfa(CH)**

(54) **Vorrichtung für den Gasnachweis mit einem aus Metalloxid bestehenden Sensor.**

(57) Der Gasnachweis wird mit einer Vorrichtung (3, 4, 5, 7, 8, 9, 10, 11) durchgeführt, deren Gassensor (5) mindestens ein Metalloxid enthält und bei Einwirkung durch ein Gas seine optischen Eigenschaften ändert. Das Metalloxid bzw. Metalloxidgemisch kann Redox-Katalysatoren enthalten. Eine Quelle (3) richtet eine Strahlung (4) so auf den Gassensor (5), dass die Strahlung entweder am Gassensor reflektiert oder durch den Gassensor hindurchtritt. Die reflektierte bzw. hindurchgetretene und durch die optische Eigenschaft des Gassensors beeinflusste Strahlung (7) gelangt auf einen Empfänger (8). Eine dem Empfänger nachgeordnete Auswerteschaltung (10) misst die Intensität der vom Gassensor beeinflussten Strahlung (7) oder vergleicht die Intensitäten der auf den Gassensor gelenkten Strahlung (4) und der vom Gassensor beeinflussten Strahlung (7) miteinander. Das Ergebnis der Messung oder des Vergleichs wird einem Anzeigegerät (11) zugeführt. Die Führung der Strahlung (4) zwischen Quelle (3), Gassensor (5) und Empfänger (8) kann über Lichtleiter erfolgen.

Fig.3

Fig.4

C 245                                    82 - 117

---

Vorrichtung für den Gasnachweis mit einem mindestens
ein Metalloxid enthaltenden Sensor.

---

Die Erfindung betrifft eine Vorrichtung für den Gasnachweis
mit einem mindestens ein Metalloxid enthaltenden Sensor, der
auf eine bestimmte Temperatur aufgeheizt wird und dessen
Eigenschaften bei Einwirkung des zu detektierenden Gases
sich ändern.

Gassensoren werden seit einiger Zeit für verschiedene
Zwecke wie zum Beispiel Umweltschutz, Garagen-Ueberwachung,
Brandschutz und Explosionsschutz verwendet. Hierzu benutzt
man billige Sensoren und Metalloxiden, deren elektrischer
Leitwert von der Konzentration der zu detektierenden Gase
wie $CO, H_2$ in der umgebenden Luft abhängt. Damit der Gasnachweis mit diesen Sensoren optimal durchgeführt werden kann,
muss der Sensor auf eine Temperatur von ca. $300^{\circ}C$ gebracht
werden. Wenn auch der bekannte Spurengasnachweis mittels des
elektrischen Leitwertes zufriedenstellend ist, hat diese
Methode jedoch einige Nachteile, die im folgenden näher beschrieben werden. Die Leistungsaufnahme für die Aufheizung
des Sensors auf seine Betriebstemperatur liegt im Bereich
von 400 mW bis 800 mW. Für viele Anwendungen ist diese Leistungsaufnahme nicht zulässig. Hierbei wird an den Spannungsabfall über lange Leitungen in grossflächigen Ueberwachungssystemen gedacht. Ferner ist die Notstromversorgung
für diese ausgedehnten Ueberwachungssysteme sehr aufwendig.
Die Leistungsaufnahme wird wesentlich durch die Anzahl der
zum Sensor führenden Zuleitungen und die Grösse der Sensoroberfläche bestimmt, die Hauptursachen für den Wärmeverlust am Sensor darstellen. Ein bekannter Sensor hat vier Zuleitungen für die Messung seiner elektrischen Leitfähigkeit, so dass an ihm ein ziemlich grosser Wärmeverlust auftritt. Die Rolle der Sensorzuleitungen im Wärmehaushalt wird umso ausgeprägter, je kleiner der Sensor-Bauteil wird.

Die sensoraktive Substanz muss bekanntlich in einer Form hergestellt werden, die sich für die Messung der elektrischen Leitfähigkeit gut eignet. Im allgemeinen sind das Filme oder Schichten, die mit verschiedenen Methoden auf Substrate aufgebracht werden, zum Beispiel Sputtern, Aufdampfen, Aufsprühen, Aufstreichen, usw. Für viele Materialien lässt sich die Herstellung eines Filmes jedoch nicht leicht realisieren. Vor allem dann, wenn zum Beispiel im Herstellungsprozess organische Substanzen, welche sich bei höheren Temperaturen zersetzen, verwendet werden und daher nicht mit den erwähnten Methoden in Form homogener Schichten hergestellt werden können.

Die gasaktiven Schichten des Sensors sind nicht sehr gasselektiv. Um eine gewisse Selektivität zu erreichen, müssen die Ansprechkurven von Schichten mit verschiedener Gasaktivität ausgewertet werden, um auf diese Weise die Querempfindlichkeit bei der Messung des elektrischen Leitwertes des Sensors zu eliminieren. Das bedeutet jedoch, dass mehrere Sensoren aufgeheizt werden müssen, wobei beträchtliche Heizverluste über die elektrischen Zuleitungen in Kauf genommen werden müssen.

Häufig werden die Sensoren in explosionsgefährdeten Räumen eingesetzt. Hohe Heizleistungen sowie elektrische Zuleitungen sind in diesem Fall besonders ungünstig.

Bei den bekannten Ueberwachungsanlagen treten Störungen auf, die zum Beispiel durch elektromagnetische Einstreuung in die Uebertragungsleitungen entstehen und so zur Auslösung von falschen Alarmen Anlass geben. Daher müssen bekanntlich aufwendige elektronische Massnahmen getroffen werden, besonders für Systeme mit Analogwertübertragung von der Sensorperipherie zur oft weit entfernten Zentraleinheit, damit Störungen auf Uebertragungsleitungen als solche erkannt werden.

Die Erfindung hat die Aufgabe, diese Nachteile zu beseitigen. Mit der Erfindung sollen folgende Vorteile erreicht werden: Geringe Heizleistung für optimale Heizung, keine Störanfälligkeit durch äussere Einflüsse. Die Aufgabe wird durch die im Patentanspruch 1 definierten Merkmale der Erfindung gelöst.

Ausführungsbeispiele der Erfindung werden anhand der Zeichnungen näher erläutert. Es zeigen:

Fig. 1 und 2    in graphischer Darstellung den Einfluss von Gasen auf die optischen Eigenschaften eines Gassensors;

Fig. 3          ein erstes Ausführungsbeispiel der Erfindung;

Fig. 4          ein zweites Ausführungsbeispiel der Erfindung;

Fig. 5 und 6    zwei Varianten der Lichtstrahlführung für das erste Ausführungsbeispiel gemäss Fig. 3;

Fig. 7, 8, 9    Varianten der Lichtstrahlführung und der Anordnung von Gassensoren für das zweite Ausführungsbeispiel der Erfindung gemäss Fig. 4;

Fig. 10, 11,    Varianten der Heizung des Gassensors.
12, 13,
14

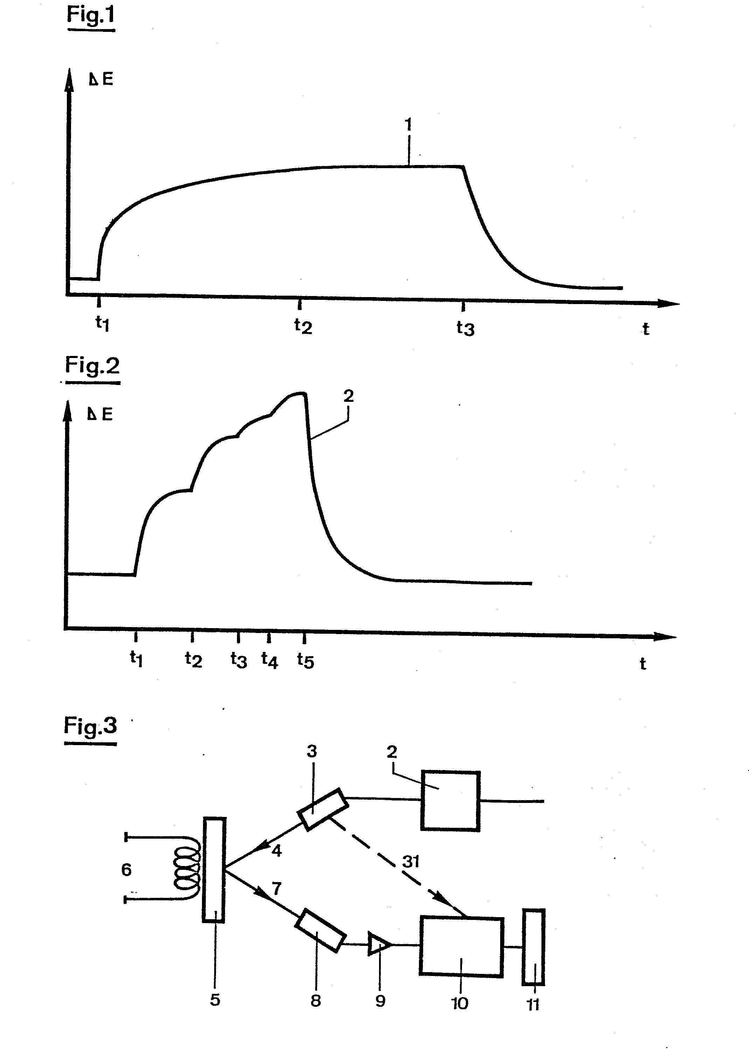

Die Fig. 1 zeigt in graphischer Darstellung die Aenderung der optischen Eigenschaften des Gassensors, wenn seine Oberfläche mit dem zu detektierenden Gas beaufschlagt wird. Der Gassensor wird mit einer Heizeinrichtung, die später noch näher erklärt wird, auf eine Temperatur aufgeheizt, die im Bereich zwischen Raumtemperatur und 350°C liegt. Wenn nun zum Zeitpunkt t1 das zu detektierende Gas, zum Beispiel Wasserstoff, auf die Oberfläche des Sensors gebracht wird, so ändert er seine optische Eigenschaft; das heisst, seine Farbe ändert sich. Die Aenderung der optischen Eigenschaft ist mit $\Delta$ E bezeichnet. Im Zeitpunkt t2 gelangt die Kurve 1, die die Aenderung der optischen Eigenschaft $\Delta$ E anzeigt, in ihren Sättigungszustand. Zum Zeitpunkt t3 wird kein Wasserstoffgas mehr auf die Oberfläche des Gassensors gebracht. Die Kurve 1 geht innerhalb kurzer Zeit wieder auf ihren Anfangspunkt zurück. Die Reversibilität der Aenderung der optischen Eigenschaft des Gassensors ist somit gewährleistet. Das Ansprechverhalten (t1) und das Abklingverhalten (t3) liegt je nach Sensortemperatur in der Grössenordnung von Sekunden bis wenigen Minuten. Durch die Wahl der Betriebstemperatur kann erreicht werden, dass der Gassensor mit einer dem Anwendungszweck entsprechenden Geschwindigkeit auf Gase anspricht. Das Material des Gassensors besteht im Beispiel der Fig. 1 aus Zinndioxid ($SnO_2$). Das Zinndioxid ändert bei einer Temperatur von ca. 250°C unter dem Einfluss von 1000 ppm Wasserstoffgas seine optische Eigenschaft gemäss Kurve 1. Bei Verwendung von anderen Materialien für den Gassensor, die später noch näher besprochen werden, und unter dem Einfluss von grösseren oder kleineren Mengen von anderen Gasen bzw. Dämpfen unterscheidet sich die Kurve der optischen Eigenschaften $\Delta$ E von der in Fig. 1 gezeigten Kurve, prinzipiell entsprechen die Aenderungen der optischen Eigenschaften jedoch der in Fig. 1 gezeigten Kurve.

Die Fig. 2 zeigt die Veränderung der optischen Eigenschaften $\Delta E$ des Gassensors (Ordinate) unter dem Einfluss von schrittweiser Zugabe von zum Beispiel 2000 ppm $H_2$. Zur Zeit t1 werden 2000 ppm $H_2$ auf die Oberfläche des Gassensors, der im vorliegenden Beispiel aus $SnO_2$ besteht, gegeben. Zu den Zeiten $t_2$, $t_3$ und $t_4$ wird die $H_2$-Konzentration um je 2000 ppm erhöht. Man erkennt an der Form der Kurve 2, dass die Aenderung der optischen Eigenschaft $\Delta E$ sich sublinear verhält. Wenn kein Gas mehr auf die Oberfläche des Gassensors trifft (Zeit $t_5$), dann fällt $\Delta E$ wieder auf den Anfangspunkt zurück. Die Fig. 2 zeigt auch hier das reversible Verhalten der optischen Eigenschaft des Gassensors. Mit dem Begriff der optischen Eigenschaften sind sowohl das Reflektionsverhalten als auch das Transmissionsverhalten des Gassensors gemeint. Das Material des Gassensors besteht aus Oxiden oder Oxidmischungen der Elemente, die in einer oder mehreren der Gruppen Ib, IIa, IIb, IIIa, IIIb, IVa, IVb, Va, Vb, VIa, VIb, VIIb, VIII einschliesslich den Lanthaniden und Aktiniden des Periodensystems genannt worden sind. Diese Oxide bzw. Oxidmischungen können mit oder ohne Katalysatoren versehen sein. Vorzugsweise werden folgende Metalloxide verwendet: $SnO_2$, $ZnO$, $TiO_2$, $WO_3$, $Cr_2O_3$, $Fe_2O_3$. Vorzugsweise werden folgende Oxide im Gemisch miteinander verwendet: $SnO_2$, $CuO$, $ZnO$, $NiO$. Die Oxide bzw. Oxidmischungen werden mit Katalysatoren, wie zum Beispiel Pt, Pd, Rh, $CuO$, $NiO$ aktiviert.

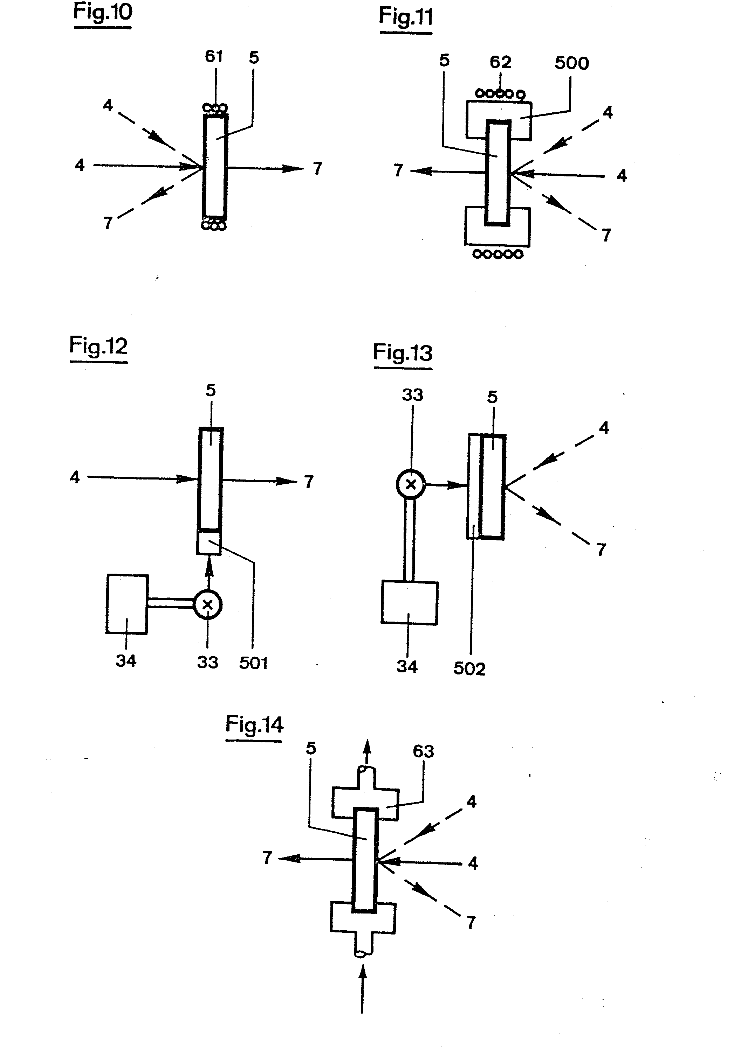

Die Fig. 3 zeigt ein Ausführungsbeispiel für eine Vorrichtung zum Gasnachweis, bei der ein auf den Gassensor geführter Lichtstrahl reflektiert wird. Ein Netzgerät oder eine Batterie 2 speist eine Strahlungsquelle 3, die einen Lichtstrahl oder Laserstrahl 4 auf die Oberfläche des Gassensors 5 gibt. Der Gassensor wird durch eine Heizeinrichtung 6 auf seine Betriebstemperatur aufgeheizt. Die Heizeinrichtung kann verschieden ausgeführt sein wie die Fig. 10, 11, 12, 13 und 14 zeigen. Der Lichtstrahl 4 wird an der Oberfläche des Gassensors 5 als Lichtstrahl 7 reflektiert und durch den Strahlungsempfänger 8 empfangen. Der Empfänger gibt ein elektrisches Signal auf den Verstärker 9. Das elektrische Signal entspricht der Lichtintensität des reflektierten Lichtstrahls 7. In der Auswerteeinheit 10 wird das elektrische Signal direkt ausgewertet, wenn die Lichtquelle 3 so konstruiert ist, dass der Lichtstrahl 4 stets eine stabilisierte Intensität aufweist. Wenn die Strahlungsquelle 3 nicht so konstruiert ist, muss ein Bezugs-Lichtstrahl 31, der in Fig. 3 gestrichelt gezeichnet ist, auf einen Komparator in die Auswerteschaltung 10 gegeben werden, der den Bezugs-lichtstrahl 31 mit dem elektrischen Signal des Lichtstrahls 7 vergleicht. Die Anzeigevorrichtung 11 zeigt das Ergebnis der Intensitätsmessung des reflektierten Lichtstrahls 7 oder den Intensitätsvergleich zwischen den Lichtstrahlen 31 und 7 an. Wenn nun ein Gas auf die Oberfläche des Gassensors 5 gemäss Fig. 1 und 2 gebracht wird, verändert sich die Reflexionseigenschaft der Oberfläche des Gassensors. Somit stellt die Intensität des reflektierten Lichtstrahls 7 ein Mass für die Art und Menge des Gases dar. Das Ergebnis wird an der Anzeigevorrichtung abgelesen.

An dieser Stelle sei darauf hingewiesen, dass die Feststellung von Gasen mittels Veränderung der Reflexionseigenschaften unempfindlich ist gegenüber elektromagnetischen Störfeldern aus der näheren oder weiteren Umgebung. Dies ist für Ueberwachungsanlagen von grosser Bedeutung. Ferner können die Gassensoren 5 auf einfache Art und Weise miniaturisiert werden und ferner brauchen sie nicht in Schichtform ausgeführt zu werden. Die Heizung 6 hat sich ebenfalls vereinfacht. Es werden nur noch zwei Zuleitungsdrähte benötigt, wodurch sich der Heizungsverlust entsprechend verringert. Die Heizung kann daher durch eine Batterie erfolgen.

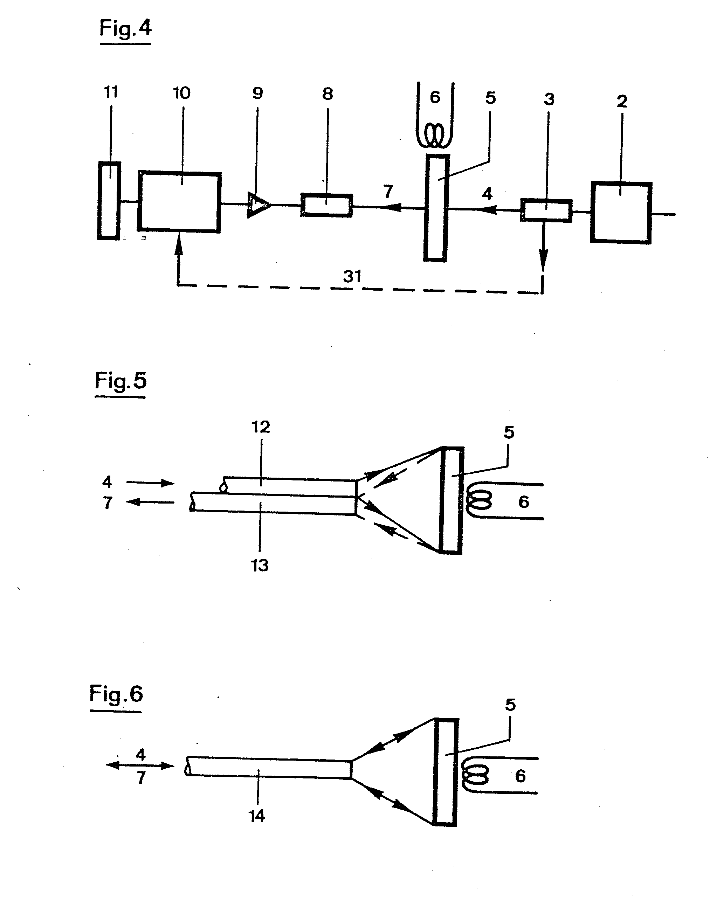

Die Fig. 4 zeigt das Netzgerät bzw. Batterie 2, die die Lichtquelle 3 speist. Diese Lichtquelle sendet einen Lichtstrahl oder Laserstrahl 4 senkrecht auf die Oberfläche des Gassensors 5, der durch die Heizeinrichtung 6 auf seine Betriebstemperatur aufgeheizt wird. Der aus dem Gassensor 5 austretende Lichtstrahl 7 wird vom Empfänger 8 empfangen, der ein der Intensität des Lichtstrahls 7 entsprechendes elektrisches Signal erzeugt und auf den Verstärker 9 gibt. Das verstärkte Signal wird in der Auswerteeinheit 10 verarbeitet. Wenn die Lichtquelle 3 die Intensität des Lichtstrahls 4 stabilisiert, d.h. konstant hält, dann misst die Auswerteeinheit 10 nur das elektrische Signal des austretenden Lichtstrahls 7, und die Anzeigeeinrichtung 11 zeigt das Ergebnis an. Wenn die Lichtquelle 3 den eintretenden Lichtstrahl 4 nicht stabilisiert, dann wird ein Bezugs-Lichtstrahl 31 auf die Auswerteeinheit 10 gegeben, die das elektrische Signal des austretenden Lichtstrahls 7 mit dem Bezugs-Lichtstrahl 31 vergleicht. Das Ergebnis wird in der Anzeigeeinrichtung 11 angezeigt. Wenn nun ein Gas mit der Oberfläche des Gassensors 5 in Berührung gebracht wird, so ändert sich die Transmissionseigenschaft des Gassensors. Die Intensität des austretenden Lichtstrahls ändert sich entsprechend. Die Auswerteeinheit 10 gibt auf die Anzeigeeinrichtung 11 solche elektrischen Signale, die der Gasart und Menge des Gases entsprechen. Beide Werte können an der Anzeigeeinrichtung 11 abgelesen werden. Der Gassensor 5 der Ausführungsform der Fig. 4 kann miniaturisiert werden und braucht nicht in Schichtform ausgebildet zu sein. Die Miniaturisierung der Heizung und die berührungslose Messart erlauben ebenfalls eine wesentliche Einsparung an Heizleistung. Dadurch kann die Heizung 6 von einer Batterie gespeist werden. Die Messung der Anwesenheit von Gasen einschliesslich der Menge dieser Gase durch die Aenderung der Transmissionseigenschaft des Gassensors ist von elektromagnetischen Störfeldern aus der weiteren oder näheren Umgebung vollkommen unabhängig.

Die Fig. 5 zeigt eine Ausführungsform der Lichtführung in einer Gasnachweisvorrichtung gemäss Fig. 3, wobei der Lichtstrahl 4 über einen Lichtleiter 12, der als Glasfaser ausgebildet sein kann, zur Oberfläche des Gassensors 5 geleitet wird. Dort wird der Lichtstrahl 7 reflektiert und gelangt in einen Lichtleiter 13, der diesen Lichtstrahl zum Empfänger 8 führt. Die Oberfläche des Gassensors 5 ist so konstruiert, dass die ankommenden Lichtstrahlen 4 einen grossen Teil der Oberfläche überstreichen und die reflektierten Lichtstrahlen 7 auf die Glasfaser 13 gerichtet sind. Für den gleichen Zweck können auch Linsen vorgesehen sein. Die Heizung erfolgt auf der Rückseite des Gassensors 5 mit Hilfe der Einrichtung 6.

Die Fig. 6 zeigt eine weitere Ausführungsform der Lichtführung, wobei der auf den Gassensor 5 hinführende Lichtstrahl 4 und der reflektierte Lichtstrahl 7 im gleichen Lichtleiter 14 geführt werden. Die Reflexionsfläche des Gassensors 5 ist so konstruiert, dass die ankommenden Lichtstrahlen 4 einen grossen Teil der Oberfläche des Gassensors 5 überstreichen und der Lichtleiter 14 möglichst viel vom reflektierten Licht sammelt. Es besteht natürlich die Möglichkeit, dass mit Hilfe von Linsen, die im Raum zwischen der Reflexionsfläche und dem Leiter 14 angeordnet sind, die Strahlen 4 und 7 in der gewünschten Weise gelenkt werden.

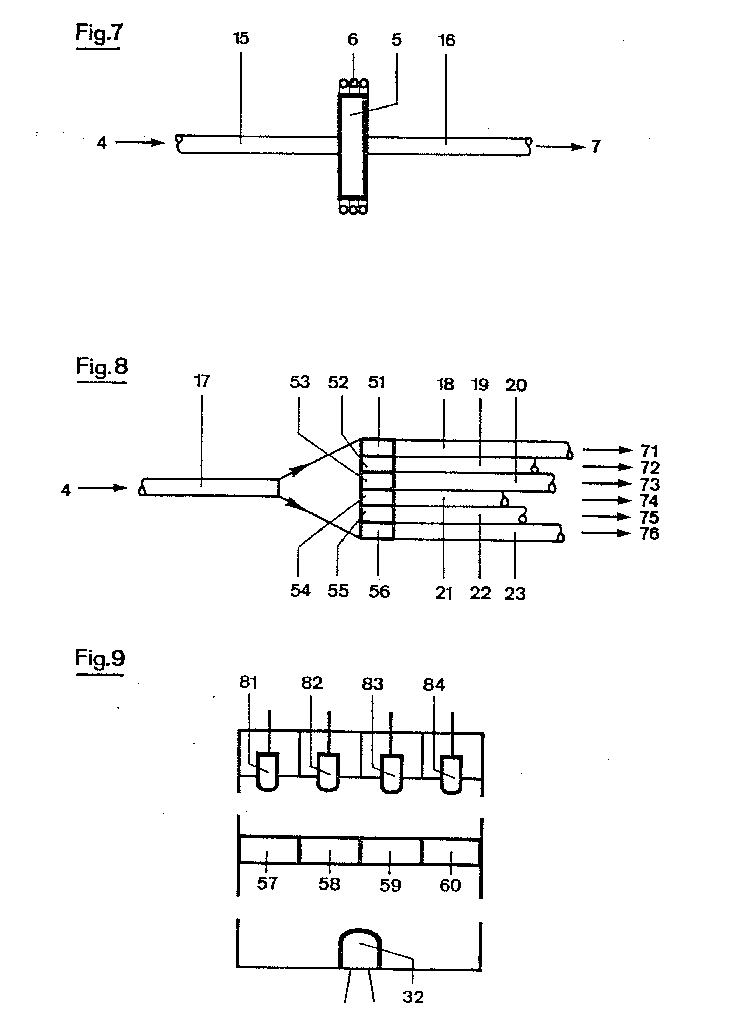

Die Fig. 7 zeigt eine Ausführungsform der Lichtstrahlführung, bei welcher der Lichtstrahl 4 über einen Lichtleiter
15 auf den Gassensor 5 geführt wird. Der Lichtstrahl 7 wird
nach Durchtritt durch den Gassensor vom Lichtleiter 16 aufgenommen und dem Empfänger 8 zugeführt. Die Heizung 6 ist
bei diesem Ausführungsbeispiel als normale Widerstandsheizung ausgebildet. Die Aenderung der Transmissionseigenschaft verändert auch die Intensität des austretenden
Lichtstrahls 7.

Die Fig. 8 zeigt einen sogenannten Multisensor 5. Er besteht
aus mehreren voneinander unabhängigen Sensoren 51, 52, 53,
54, 55, 56. Diese Sensoren werden gemeinsam vom Lichtstrahl
4 über den Lichtleiter 17 angestrahlt. Jeder der Sensoren
51 bis 56 kann auf Grund seiner besonderen Materialauswahl
auf ein bestimmtes Gas sensibilisiert sein. Daher werden
solche Multisensoren dort verwendet, wo mit Gasgemisch
komptexer Zusammensetzung gerechnet werden muss. Die verschiedenen Sensoren können entweder von der gleichen Heizeinrichtung 6 auf ihre Betriebstemperatur aufgeheizt werden,
oder es wird für jeden der Sensoren 51 bis 56 eine individuelle Beheizungsvorrichtung vorgesehen. Dadurch besteht
die Möglichkeit,      die einzelnen Sensoren auf unterschiedliche Temperaturen aufzuheizen, so dass die Sensibilität auf verschiedene Gase erhöht wird. In diesem Fall
sind die einzelnen Gassensoren 51 bis 56 gegeneinander
wärmeisoliert, so dass sie sich gegenseitig nicht beeinflussen können. Jeder der Gassensoren ändert spezifisch
dem Gas entsprechend seine Transmissionseigenschaft. Dies
macht sich in der Intensität der austretenden Lichtstrahlen
71, 72, 73, 74, 75, 76 bemerkbar. Die Lichtleiter 18, 19,
20, 21, 22, 23 führen ihre Lichtstrahlen zu den zugeordneten Empfängern 8. Bei den Multisensoren arbeiten die

Empfänger gemeinsam auf einer Auswerteeinheit 10. Diese verarbeitet die elektrischen Signale und steuert die Anzeigevorrichtung 11 so an, dass die Ergebnisse der einzelnen Sensoren 51 bis 56 entweder zeitlich aufeinander folgen oder gleichzeitig angezeigt werden. Dies hängt von der Konstruktion der Anzeigevorrichtung 11 ab. Hat sie sechs Anzeigefelder, so können die Ergebnisse der sechs Sensoren 51 bis 56 gleichzeitig angezeigt werden. Wenn die Anzeigevorrichtung nur ein Anzeigefeld besitzt, so werden die Ergebnisse der sechs Sensoren 51 bis 56 in bestimmter zeitlicher Reihenfolge angezeigt.

Die Fig. 9 zeigt eine andere Ausführungsform eines Multisensors, der aus einem Paket von Sensoren 57, 58, 59, 60 besteht. Diese Sensoren werden von der Lichtquelle 32 angestrahlt. Sie werden mit dem zu detektierenden Gas bzw. Gasgemisch beaufschlagt, das entweder unterhalb oder oberhalb resp. beidseitig in das Gehäuse des Multisensors eingeführt wird, und verändern ihre optische Transmissions-Eigenschaft. Diese Sensoren 57 bis 60 werden in ähnlicher Weise wie im Ausführungsbeispiel der Fig. 8 entweder gemeinsam durch eine Heizeinrichtung auf ihre Betriebstemperatur aufgeheizt oder individuell. Im letzteren Fall besitzt jeder der Sensoren eine eigene Heizvorrichtung, durch die er auf seine individuelle Betriebstemperatur aufgeheizt wird. Die aus den Sensoren austretenden Lichtstrahlen, deren Intensität sich entsprechend der Transmissions-Eigenschaften geändert hat, gelangen auf Fotodioden 81, 82, 83, 84, die entsprechende elektrische Signale an den Verstärker 9 geben, wie es in dem Ausführungsbeispiel der Fig. 4 gezeigt ist. In einer gemeinsamen Auswerteeinheit 10 werden die Signale sämtlicher Empfänger 81, 82, 83, 84 verarbeitet und entweder gemeinsam oder in zeitlicher Reihenfolge auf die Anzeigeeinrichtung 11 gegeben.

Die Fig. 10 zeigt eine Ausführungsform der Heizeinrichtung
6. Heizdrähte 61 sind um den Sensor 5 gewickelt und heizen
ihn auf seine Betriebstemperatur auf. Die gestrichelt und
durchgehend gezeichneten Lichtstrahlen sollen andeuten,
dass diese Widerstandsheizung sowohl für die Reflexionswie auch Transmissions-Messmethode anwendbar ist.

Die Fig. 11 zeigt eine induktive Heizung. Der Gassensor 5
ist von einem ringförmigen oder quadratischen bzw. rechteckigen Metallrahmen 500 umgeben. Die Form des Metallrahmens
richtet sich selbstverständlich nach der Form des Sensors 5.
Der in den isolierten Drähten 62 fliessende Strom induziert
im Metallring 500 die für die Aufheizung des Sensors 5 notwendige Temperatur. Die gestrichelt und durchgehend gezeichneten Lichtstrahlen sollen zeigen, dass diese Heizung für
die Reflexions- und Transmissions-Messmethode anwendbar ist.

Die Fig. 12 zeigt eine Strahlungsheizung. Eine Lichtquelle
33, die von einer Batterie 34 gespeist wird, strahlt eine
Absorptionsschicht 501 an, die den Sensor 5 auf seine Betriebstemperatur aufheizt. Die Absorptionsschicht kann auf
dem gesamten Umfang des Sensors verteilt sein und von mehreren Lichtquellen bestrahlt werden. Diese Heizung ist nur
für die Transmissions-Messmethode vorgesehen, was durch die
durchgehend gezeichneten Lichtstrahlen dargestellt ist.

Die Fig. 13 zeigt eine Strahlungsheizung, die nur für die
Reflexions-Messmethode vorgesehen ist. Die Lichtquelle 33,
welche von einer Batterie 34 gespeist wird, strahlt eine
Absorptionsschicht 502 an, die den Sensor 5 auf seine Betriebstemperatur bringt. Die Strahlungsquelle 33 ist vorzugsweise als Laserstrahlquelle ausgebildet. Wenn die räumlichen Dimensionen des Sensors 5 und die Absorptionsschicht 502 richtig gewählt sind, kann der auftretende
Mess-Lichtstrahl den Sensor 5 auf seine Betriebstemperatur
aufheizen.

Die Fig. 14 zeigt eine Konvektionsheizung. Der Sensor 5
ist von einem Gehäuse 63 umgeben, in das z.B. heisse Luft
eingeblasen wird. Der auf seine Betriebstemperatur aufgeheizte Sensor ist für die Transmissions- und Reflexions-
Messmethode verwendbar, was durch die Lichtstrahlen 4 und 7
symbolisch angedeutet ist.

C 245

82-117  11. März 1983 GP/fo
CERBERUS AG, 8708 Männedorf

P A T E N T A N S P R U E C H E

1. Vorrichtung für den Gasnachweis mit einem mindestens
ein Metalloxid enthaltenden Sensor, der auf eine bestimmte Temperatur aufgeheizt wird und dessen Eigenschaften bei Einwirkung des zu detektierenden Gases
sich ändern,
g e k e n n z e i c h n e t   d u r c h  folgende
Anordnung:
- ein mindestens ein Metalloxid enthaltender Gassensor (5), der bei Einwirkung des nachzuweisenden
Gases seine optischen Eigenschaften ändert,
- eine Quelle (3) zur Erzeugung einer Strahlung (4)
auf den Gassensor (5),
- ein Strahlungsempfänger (8), der eine von der optischen Eigenschaft des Gassensors (5) beeinflusste
Strahlung (7) empfängt und ein entsprechendes elektrisches Signal erzeugt,
- eine das Signal empfangende Auswerteschaltung (10)
mit einer Anzeige (11), die die ermittelte Gaskonzentration anzeigt.

2. Vorrichtung nach Anspruch 1,  g e k e n n z e i c h -
n e t  durch folgende Bauteile:
- erste Führungsmittel (12, 14, 15, 17) zum Hinführen
der Strahlung (4) aus der Quelle (3) zum Gassensor
(5),
- zweite Führungsmittel (13, 14, 16, 18, 19, 20, 21,
22, 23) zum Wegführen der Strahlung (7,71-76) vom
Gassensor (5),
- Auswertemittel in der Auswerteschaltung (10), die
die weggeführte Strahlung (7,71-76) misst oder die

9. Vorrichtung nach Anspruch 1, d a d u r c h   g e -
k e n n z e i c h n e t , dass bei Verwendung einer
Quelle (3) mit stabilisierter Intensität der Strahlung (4)
die Auswerteschaltung (10), die die Intensität der vom
Gassensor (5) weggeführten Strahlung (7,71-76) misst,
folgende Bauteile enthält:

- einen Verstärker (9) zur Verstärkung des elektrischen
Signals, das vom Strahlungsempfänger (8) abgegeben
wird, und

- eine elektronische Auswerteeinheit, welche die Intensität der empfangenen Strahlung (7, 71-76) misst und
die ermittelte Gaskonzentration durch das Anzeigegerät
(11) anzeigt.

10. Vorrichtung nach Anspruch 1, d a d u r c h   g e -
k e n n z e i c h n e t , dass bei Verwendung einer
Quelle (3) mit unstabilisierter Intensität der Strahlung
(4) die Auswerteschaltung (10), die die Intensität der
zum Gassensor (5) hingeführte Strahlung (4) und der vom
Gassensor (5) weggeführten Strahlung (7,71-76) miteinander
vergleicht, folgende Bauteile enthält:

- einen Verstärker (9) zur Verstärkung des elektrischen
Signals, das vom Strahlungsempfänger abgegeben wird,
und

- eine elektronische Auswerteeinheit, welche das Verhältnis der Intensitäten der hingeführten (4) und empfangenen Strahlung (7,71-76) bildet und die ermittelte
Gaskonzentration durch das Anzeigegerät (11) anzeigt.

11. Vorrichtung nach Anspruch 1, d a d u r c h   g e -
k e n n z e i c h n e t , dass der Strahlungsempfänger
(8) Filter, Prismen oder Gitter enthält, welche das Auswerten des optischen Spektrums des vom Gassensors (5)
weggeführten Lichtstrahls (7,71-76) ermöglichen.

**Fig.1**

**Fig.2**

**Fig.3**

Fig.4

Fig.5

Fig.6

Fig.7

15    6    5    16

4 →              → 7

Fig.8

17    53  52  51    18  19  20

4 →                          → 71
                             → 72
                             → 73
                             → 74
                             → 75
                             → 76

54  55  56    21  22  23

Fig.9

81    82    83    84

57    58    59    60

32

**Fig.10**

61  5

4

4 → 7

7

**Fig.11**

5  62  500

4

7 ←  → 4

7

**Fig.12**

5

4 → → 7

34  33  501

**Fig.13**

33  5

4

x →

7

34  502

**Fig.14**

5  63

7 ←  → 4

7